# EUROPEAN PATENT SPECIFICATION

(11) **EP 2 277 777 B1**
(45) Date of publication and mention of the grant of the patent: **03.06.2020**
(21) Application number: 09749959.4
(22) Date of filing: 16.04.2009
(51) Int. Cl.: B64F 5/10, B64C 3/18, B23P 19/04, B23P 19/10, B64C 5/02

(54) **METHOD FOR MOUNTING TORSION BOXES FOR USE IN AERONAUTICS**
VERFAHREN ZUR MONTAGE VON TORSIONSKÄSTEN ZUR VERWENDUNG IN DER RAUMFAHRT
PROCÉDÉ DE MONTAGE DE BOITES DE TORSION POUR L'AÉRONAUTIQUE

(30) Priority: 19.05.2008 ES 200801447
(43) Date of publication of application: 26.01.2011
(73) Proprietor: Airbus Operations S.L., 28906 Getafe, Madrid (ES)
(72) Inventor: SÁNCHEZ-BRUNETE ÁLVAREZ, Desiderio, 28028 Madrid (ES)
(74) Representative: ABG Intellectual Property Law, S.L.
(86) International application number: PCT/ES2009/070102
(87) International publication number: WO 2009/141475

(56) References cited:
- EP-A1- 1 563 958
- WO-A1-2007/034197
- WO-A1-2009/053730
- ES-A1- 2 146 140
- ES-A1- 2 209 575
- ES-A1- 2 258 893
- ES-T3- 2 215 123
- FR-A1- 2 894 869
- US-A- 2 403 569
- US-A- 4 967 947
- US-A- 5 249 785
- US-A1- 2003 042 364
- US-A1- 2004 093 731
- US-A1- 2005 236 524

## Description

### OBJECT OF THE INVENTION

The present invention has the aim of providing a method for assembly of a torsion box type structure for aeronautical use ensuring certain minimum dimensional tolerances in the aerodynamic outer surface of the skin, simplifying the assembly method and eliminating unnecessary assembly operations.

### TECHNICAL FIELD OF THE INVENTION

As revealed in the previous section, the present invention has application in the aeronautical industry, in the technical field of aircraft structures, particularly torsion box type structures.

Torsion box type structures, simply named as torsion boxes, whose assembly method this invention refers to, are structures well known in the technical field of aircraft structures. So, torsion boxes currently constitute the main structural element of the wings and the horizontal tail plane in aircraft.

A torsion box is essentially defined as a structure consisting of: some spars, normally straight, arranged longitudinally in the structure; some ribs, which are arranged transversely across the spars and joined to them; and a skin, which covers the structure around the spars and the ribs, and is joined to them.

The spars fundamentally have the function of absorbing bending stresses, the ribs for their part distribute the stresses along the spars and give form to the skin, and finally the skin distributes to the ribs and spars the aerodynamic loads of lift and resistance which are applied on the aerodynamic surface of the skin. In addition, torsion boxes usually incorporate some stringers which are arranged attached to the inner surface of the skin and which contribute the function of providing stability to the skin and preventing it from buckling.

The outer surface of the skin of torsion boxes for aeronautical use requires very narrow tolerances, of the order of 0.01 mm, bearing in mind that there are aerodynamic forces acting on that surface. It is for this reason that the fitting of the skin on these structures acquires special importance.

Finally, it can be pointed out that, although the present invention refers to torsion boxes for aeronautical use, it must not be understood as being restricted thereto since, as revealed from the description that is made below, it can also be applied to structures consisting of a skeletal framework that gives exterior form and a substantially flaccid skin in which it needs to be made sure that the outer surface of the skin has certain dimensional tolerances.

### BACKGROUND OF THE INVENTION

Conventionally, and for the assembly of structures such as torsion boxes for aeronautical use, as well as other structures of considerable size, a support structure is used for the different elements to be fitted, known as an assembly jig.

The technique used for the assembly of structures such as torsion boxes consists of the following basic operations: support; positioning; temporary fixing; and join.

Support is understood to be the arrangement of elements to be fitted in an assembly jig.

Positioning is the operation consisting of determining the correct position of the element to fit with respect to other elements of the structure, in other words, the referencing of the element and the location of the element in that position.

The operation of temporary fixing consists of making a temporary join prior to the final join between the elements making up the structure to assemble. In riveted joins, the temporary join is conventionally done by means of some assembly clamps which are arranged traversing the surfaces of the elements to attach, following a prior drilling of those surfaces. The aim of the temporary fixing is to systematize and facilitate the assembly by permitting elements to be added or removed during the assembly and thereby, for example, allow access to other assembly elements, for tools, operators, etc.

Finally, join is the operation of final fixing between the elements to fit. The join between the elements of torsion boxes for aeronautical use is usually done by means of riveting.

Temporary fixing and the join between the different elements of a torsion box is conventionally done by means of overlapping by some extensions made in the elements to attach or pieces included in them. So, the edge of the rib typically has some flanges for its join to the skin and some flaps for its join to the spars, while for their part the inner faces of the spars have some reinforcements via which they are attached to the ribs.

The conventional method for assembly of torsion boxes for aeronautical use basically consists of first assembling the structure of the skeleton of the torsion box, in other words, the spars and the ribs, and, once the skeleton has been assembled, the skin is fitted to it.

Described below in detail is a conventional method for the assembly of a torsion box.

First, the spars are supported and positioned on the assembly jig, correctly referenced.

Then the ribs are positioned longitudinally and transversely, in other words in the direction longitudinal and transverse to the spars respectively. The longitudinal positioning of the ribs is done on the basis of reinforcements provided on the inner face of the spars with the task of acting as their join to the ribs. The transverse positioning is obviously more critical from the point of view of dimensional tolerances, and cannot be carried out on the basis of reinforcements of the spars as with the longitudinal positioning. For this purpose, an auxiliary device is conventionally used which essentially consists of some stops or templates that limit the internal contour of the skin and therefore predefine the correct position of the ribs when making contact with those stops or templates. Once each rib has been positioned, it is temporarily fixed to the spars, by means of clamping with the assembly clamps.

Next, the join is carried out between the spars and the ribs, with the temporarily fixings being replaced by the final ones, usually by means of drilling and riveting.

Finally, once the skeleton of the structure, formed from the spars and the ribs, has been assembled, the skin is then proceeded to be fitted. To achieve this, the skin is brought up to the ribs and spars and laid over them in its correct position. The positioning of the skin is carried out in such a way that each one of the upper and the lower parts or portions (as well so-called upper skin and lower skin) making up the torsion box extends from the longitudinal central line of the skin as far as the spars, adjusting and ensuring contact with the flanges of the ribs.

The assembly has to reflect the theoretical design of the structure exactly, nevertheless it is not unusual that, following the assembly, the surface of the skin is outside of its tolerance, with projecting zones and sunken zones inevitably being produced in the surface of the skin. This can be due to manufacturing errors such as deviations in the angle of opening of the flanges or deviations in the thickness of the skin, though it is mainly due to assembly errors on account of imprecise positioning of the rib, above all as a consequence of the intrinsic inaccuracy of the system of positioning the ribs based on the use of the said stops or templates.

In order to solve these defects in assembly of the skin and thereby ensure the required tolerances, certain operations known as adjustment operations are currently carried out, before making the final join. These adjustment operations essentially consist of making local modifications in the join zone of the flanges of the ribs with the skin, in which the flanges are deformed, by cutting them or filling the gaps with supplementary pieces, either fluid or solid. These adjustment operations present the drawback that they are very laborious and therefore considerably increase the cost of the assembly method.

As has been seen, some of the drawbacks shown by the conventional method for assembly of torsion boxes are: inaccuracy of the aerodynamic surface of the skin following the assembly; the complexity of the positioning system for the ribs (stops or templates); and the carrying out of laborious adjustment operations.

Document WO 2007/034197 A1 discloses a method according to the preamble of claim 1 of assembling parts to form an aircraft component, in which a first surface of a first part (for example a wing skin) is to be positioned in the assembly adjacent to a second surface of a second part (for example a rib foot). This method comprises the steps of taking measurements of the first part, taking measurements of the second part with a laser, and calculating the size and shape of the space that will be generated when the first and second parts are assembled. A shim of varying thickness in dependence upon the results of the calculating step is manufactured and the first and second parts are assembled with the shim positioned between the first and second parts, the varying thickness of the shim compensating for a varying spacing of the first and second surfaces.

### DESCRIPTION OF THE INVENTION

The method proposed in the present invention aims to avoid the drawbacks stated above, permitting torsion boxes to be obtained that are more accurate in the aerodynamic surface of the skin, simplifying the assembly and eliminating unnecessary adjustment operations, thereby achieving a reduction in cost and an improvement in the performance of the torsion boxes produced.

The assembly method for torsion boxes for aeronautical use of the present invention basically consists of assembling the skeleton of the torsion box (spars and ribs) simultaneously with the skin, in such a way that the ribs are positioned with reference to the skin, being temporarily fixed to the latter once positioned, rather than to the spars.

The skin of the torsion boxes for aeronautical use has the nature of being flaccid, flaccid being understood as the fact that the skin, prior to being assembled on the skeleton of the structure, does not per se have the form that it acquires once assembled, instead, its form can vary, and in particular it can be observed that the skin of torsion boxes is primarily flaccid in the transverse direction since longitudinally they are stiffened by the stringers.

This characteristic that the skin is flaccid has the consequence that, in order to be able to position the ribs correctly against the skin, it is necessary on the one hand to provide the skin with the theoretical form that it has to acquire once assembled on the structure and, on the other hand, to provide means so that during assembly the skin firmly maintains that theoretical form without undergoing any deformations or other alterations deriving from the actual manipulation of the skin during assembly.

This basic operation consisting of giving form to the skin and maintaining that form during the assembly is known as the pre-forming operation, and is sui generis of the method of the invention that is claimed.

The present invention also claims a device for carrying out the pre-forming operations known as the device for pre-forming.

The device for pre-forming of the present invention essentially consists of a template element that is basically characterized by the fact that when the skin is forced on the template element the outer surface of the skin acquires its exact theoretical form and in that it has means for securing and tightening of the skin, with the aim of maintaining the form of the skin. So, the means of securing and tightening have to provide the skin with the right internal tension so that it does not deform when carrying out the operations of the method. In order to achieve this, a characteristic of the device for pre-forming is that the means of securing of the skin are such that no local deformations are introduced at the securing points plus the fact that these are conveniently distributed. Another additional characteristic of the device for pre-forming is that the means of securing and tightening are arranged in such a way that they permit the passage of drill-bits and fixings along with the proper carrying out of the operations of the method.

Described below in detail is an assembly method of a torsion box according to the invention that is claimed.

As with the conventional method described above, the spars are positioned and supported, properly referenced, on an assembly jig.

Next the ribs are positioned. The longitudinal positioning is carried out in the same way as for the conventional method already described, starting from the reinforcements of the spars. The difference with the conventional method lies in the transverse positioning of the ribs which, as has been described, is carried out by means of a pre-formed skin and essentially consists of determining the correct transverse position of the ribs with the condition that these connect against the pre-formed skin, in such a way that, by means of rotations or displacements in the assembly plane of the ribs their best seating against the skin is encountered.

When the ribs are being positioned, they are temporarily fixed to the pre-formed skin and to the spars, with the corresponding clamping being carried out.

Finally, the join operations among the spars, the ribs and the skin are carried out, replacing the temporary fixings for final joins, usually by means of drilling and riveting.

A variant of the method of the invention described above consists of separately carrying out the assembly of one of the portions of skin (the upper and the lower) and afterwards the other portion of skin. This variant demonstrates the utility of torsion boxes that incorporate ribs divided into portions so, with the ribs that incorporate a portion of the upper rib and another portion of the lower rib; it is possible to achieve a better adjustment as a result of applying the assembly method of the invention. In this variant, the method would consist of first assembling a portion of skin, pre-forming that portion and temporarily fixing the portions of respective ribs to that portion of pre-formed skin and afterwards that portion of the rib would be attached to the spars withdrawing the portion of skin, and then the other portion of skin would be assembled likewise proceeding to temporarily fix the portions of the rib also with the other portions of the rib already assembled, and finally the portions of skin and the spars, if appropriate, are attached together with the portions of skin.

### BRIEF DESCRIPTION OF THE FIGURES

The present invention will be fully understood on the basis of the brief description appearing below and on the accompanying drawings which are presented by way of example only and are thereby not restrictive within the present invention and where:

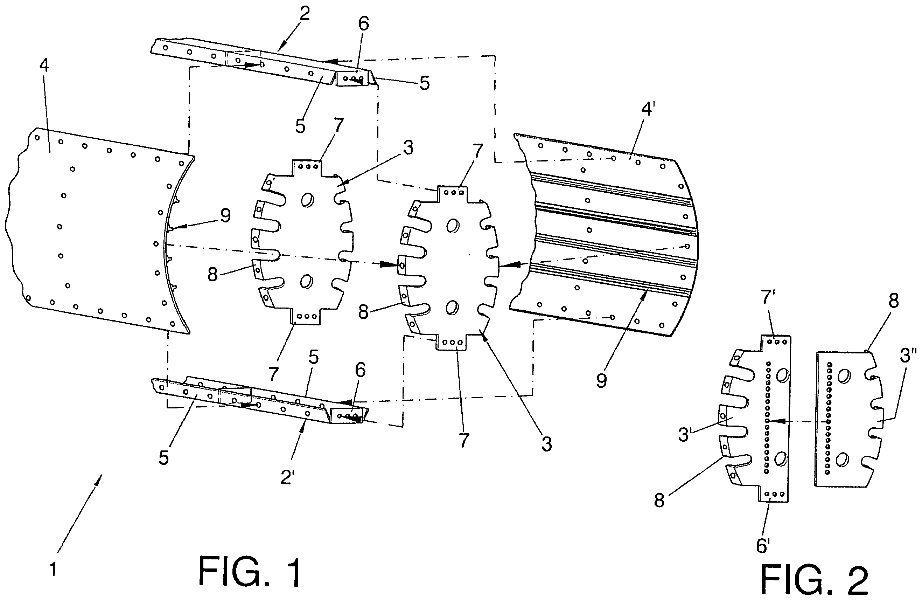

Figure 1 shows an exploded perspective view of a torsion box structure for aeronautical use with the elements constituting it and whose assembly forms the object of the present invention: spars, ribs and skin.
Figure 2 shows a perspective view of a type of rib described in an embodiment of the invention consisting of a portion of the upper rib and a portion of the lower rib.
Figure 3 schematically represents a sequence of the assembly method of a torsion box structure showing a view of the structure in the different steps making up the assembly sequence.
Figure 4 shows a schematic perspective view of a device for pre-forming used in the assembly method, with reference to an assembly jig in which the spars are shown positioned and supported on that jig.

### EMBODIMENT OF THE INVENTION

With the aim of arriving at a better understanding of the object and functionality of this patent, and without being regarded as restrictive solutions, given below is a description of an embodiment of the invention based on the figures stated above.

The embodiment that is described below relates to an assembly method for a torsion box (1) for aeronautical use as shown in the figures, whose constituent elements to assemble are essentially the following:
- A forward spar (2) and a rear spar (2'), arranged longitudinally in the structure;
- Some ribs (3) attached to the spars (2, 2') and arranged transversely in the structure, which in the present embodiment consists of an upper portion of rib (3') and a lower portion of rib (3'') in each of them; and
- A skin (4, 4') arranged covering the structure around the spars and the ribs and attached to them, including an upper portion of skin (4) and a lower portion of skin (4') (as well so-called upper skin and lower skin respectively); ensuring with the method certain dimensional tolerances required in the aerodynamic outer surface of the skin (4, 4'). The skin is provided with some stringers (9).

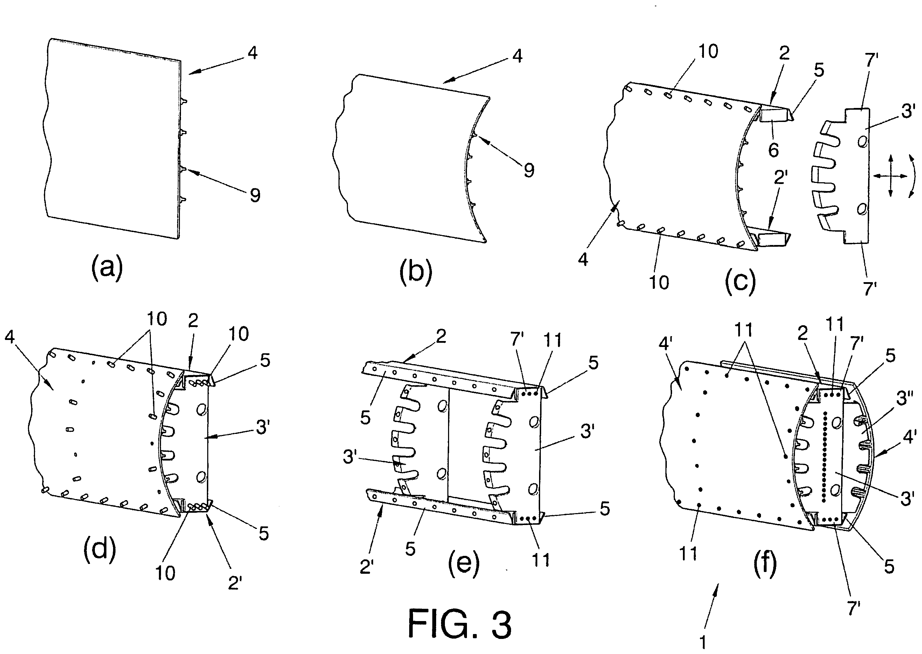

Described below is the assembly method of the invention applied to the said torsion box structure (1), making reference to figure 3.

One starts from the upper portion of skin (4) without the appropriate form (figure 3a) since it is flaccid; by means of the pre-forming operation and using a device for pre-forming, the upper portion of skin (4) is forced into the theoretical form (figure 3b) which it has to acquire once it has been assembled on the structure in such a way that said theoretical form is maintained firm during the assembly.

Once the portion of skin (4) is pre-formed, it is brought up to the forward and rear spars which have been previously positioned in the assembly jig with the correct reference. At this moment the temporary fixing is carried out between the portion of skin (4) and the spars (2, 2') via the flanges (5) of the spars, using assembly clamps (10) .

The positioning of the upper portions of the ribs (3') is then carried out and they are given the corresponding adjustment against the inner surface of the skin by means of suitable rotations and displacements of the rib in the transverse plane (figure 3c). This adjustment can be carried out with the aid of mechanical manipulation means.

Figure 3d shows the temporary fixing operation of the upper portions of ribs, which is carried out once each portion of the rib has been positioned. The fixing is done by overlapping of the extensions (7') of the portions of the ribs with the reinforcements (6) of the spars (2, 2') and the portion of skin (4).

The next step is to withdraw the portion of the upper skin and to attach the portions of the ribs to the spars, replacing the clamps (10) for rivets (11), shown in figure 3e.

The rest of the assembly method consists of assembling the other part of the torsion box (1) to the lower portion of skin (4') and the lower portions of the ribs (3")). The steps to follow are analogous to the steps described for the assembly of the part of the torsion box (1) formed from the upper portion of skin (4) and the upper portions of the ribs (3'), mutatis mutandi, bearing in mind that the lower portion of the rib (3'') overlaps the upper portion of the rib (3').

Finally, the temporary fixings are replaced with joins and the two portions of the upper (4) and the lower (4') skins are joined to the set of spars (2, 2') and the ribs (3', 3''). Figure 3f shows the assembled torsion box structure (1).

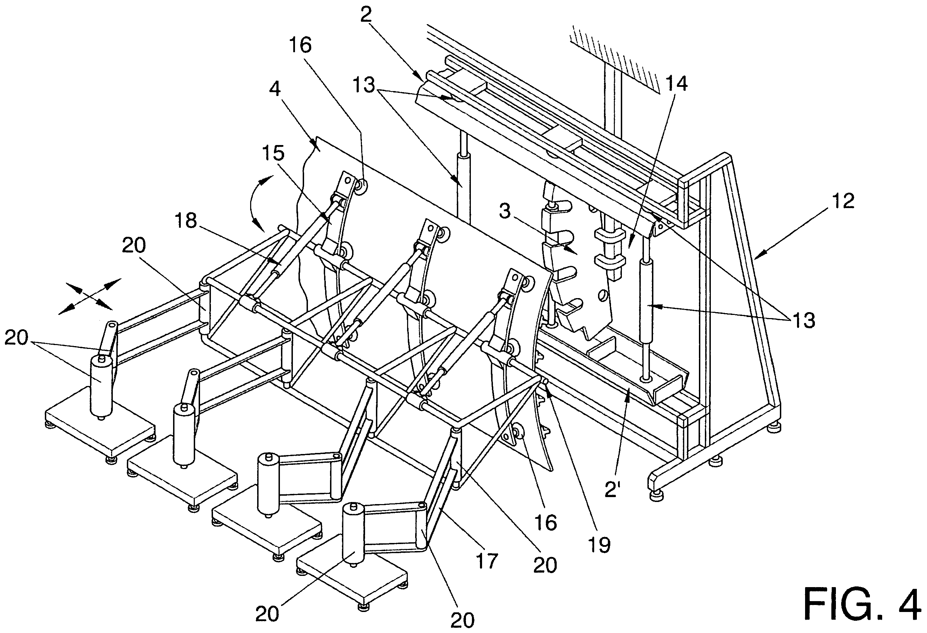

In figure 4 an embodiment can be seen of a device for pre-forming according to the present invention and its arrangement with respect to the assembly jig (12) of the torsion box, where the spars (2, 2') are supported and positioned using conventional positioning means (13). Also shown are conventional means of mechanical manipulation of the ribs (14) which are suspended from a gantry crane.

The device for pre-forming of the embodiment includes a template element (15) such that when the skin is forced on the template element the outer surface of the skin (4, 4') acquires its exact theoretical form and it maintains that form, for which it is provided with means of securing and tightening (15) of the skin (4, 4'). The device also includes some means of support and positioning (16, 17, 18, 19) of the template element (15), consisting of means of translation (16, 19) and means of positioning in spatial rotation (17, 18), with the function of positioning the skin (4, 4') in the structure with the exact theoretical form according to the described method.

## Claims

1. Method for assembling a structure for an aircraft, the structure essentially consists of:
a set of structural elements (2,3) which together constitutes a skeleton of the structure; and
a skin (4,4') that is arranged covering the structure around the skeleton and connected to it; the skin being substantially flaccid in such a manner that it substantially has an indeterminate form per se until it is arranged connected on the skeleton; the skin having an outer surface which requires dimensional tolerances thereon once the skin is assembled on the skeleton;
the method comprising the following steps:
a) pre-forming the skin by a device; this step essentially consisting of giving a shape to the skin in such a manner that the skin not being deformed or undergone alterations during its manipulation in the assembly;
b) positioning and temporary fixing the skeleton of the structure, with respect to the pre-formed skin; this step essentially consisting of determining the relative position between the structural elements constituting the skeleton with the condition that the skeleton connects against the pre-formed skin, as well as temporarily attaching the pre-formed skin to the skeleton and the elements constituting the skeleton to each other;
c) final join of the skeleton to the skin;
the method being **characterised in that** the device for pre-forming the skin comprises:
a template element (15) having means for securing and tightening the skin such that when the skin is forced on the template element (15) the outer surface of the skin acquires its exact theoretical form that the skin should have once assembled on the skeleton of the structure and firmly maintains that form via providing the skin the right internal tension so that it does not deform when carrying out the operations of the method, the means of securing and support being arranged in such a way that they permit the passage of drill-bits and fixings along with the proper carrying out of the operations of the method;
means for supporting and positioning (16,17,18,19) the template element (15), comprising means for positioning in translation (16,19) and means for positioning in three-dimensional rotation (17,18), with the function of positioning the skin on the skeleton of the structure.

2. Method for assembling a structure for an aircraft, according to claim 1, applied to a torsion box structure type (1) which essentially consists of:
a skeleton, comprising: a plurality of spars (2) arranged longitudinally in the structure 1 and a plurality of ribs (3) arranged transversely in the structure; and
a skin (4, 4') arranged covering the structure around the spars and the ribs and attached to them; the skin having an aerodynamic outer surface which requires dimensional tolerances thereon once the skin is assembled on the skeleton;
the method comprising the following steps:
a) pre-forming the skin; this step essentially consisting of deforming the skin in order to achieve the exact theoretical form that the skin should have once assembled on the spars (2) and the ribs (3) of the torsion box structure (1);
b.1) positioning the spars (2); this step essentially consisting of supporting the spars in an assembly jig (12), such that the exact relative position existing between the spars in the assembled structure of the torsion box structure (1) remains fixed;
b. 2) positioning and temporary fixing the pre-formed skin to the spars; this step essentially consisting of locating the pre-formed skin onto the spars in the correct position that the skin occupies in the assembled structure of the torsion box (1), and provisionally joining the preformed skin and the spars to each other;
b.3) positioning and temporary fixing the ribs to the pre-formed skin and to the spars; essentially consisting of locating the ribs in their correct position with the condition that the ribs connect against the pre-formed skin and provisionally joining the ribs to the pre-formed skin and the spars;
c.1) final join the spars to the ribs;
c.2) final join the skin to the spars and the ribs.

3. Method for assembling a structure for an aircraft, according to claim 2, applied to a torsion box structure (1) type which essentially consists of:
a skeleton, comprising: a front spar (2) and a rear spar (2') arranged longitudinally in the structure, and a plurality of ribs (3) arranged transversely in the structure, each of the ribs comprising an upper portion of the rib (3) and a lower portion of the rib (3'); and
a skin, comprising an upper portion of the skin (4) and a lower portion of the skin (4'), arranged covering the structure around the spars and the ribs and attached to them; the skin having an aerodynamic outer surface which requires dimensional tolerances thereon once the skin is assembled on the skeleton;
the method comprising the following steps:
1.a) pre-forming one of the portions of the skin, that is the upper (or the lower) portion of the skin; this step essentially consisting of deforming the portion of the skin in order to achieve the exact theoretical form that it should have once assembled on the spars (2) and the ribs (3) of the torsion box structure (1);
1.b.1) positioning the spars (2); this step essentially consisting of supporting the spars on an assembly jig (12), such that the exact relative position existing between the front spar and the rear spar of the assembled structure of the torsion box structure (1) remains fixed;
1.b.2) positioning and temporary fixing the pre-formed portion of the skin to the spars; this step essentially consisting of locating the pre-formed portion of the skin onto the spars in the correct position that the portion of the skin occupies in the assembled structure of the torsion box structure (1), and provisionally joining the pre-formed portion of the skin and the spars to each other;
1.b.3) positioning and temporary fixing the upper (or the lower) portions of the ribs to the pre-formed portion of the skin and to the spars; essentially consisting of locating the portions of the ribs in their correct position with the condition that the portions of the ribs connect against the pre-formed portion of the skin, and provisionally joining the upper (or the lower) portions of the ribs to the pre-formed portion of the skin and the spars;
1.c.1) final join the spars to the upper (or the lower) portions of the ribs;
1.c.2) final join of the portion of the skin to the spars and the upper (or the lower) portions of the ribs;
2.a) pre-forming the other portion of the skin, that is the lower (or the upper) portion of the skin; this step essentially consisting of deforming the portion of the skin in order to achieve the exact theoretical form that- the portion of the skin should have once assembled on the spars (2) and the ribs (3) of the torsion box structure (1);
2.b.1) positioning and temporary fixing the pre-formed portion of the skin to the spars; this step essentially consisting of locating the pre-formed portion of the skin onto the spars in the correct position that the portion of the skin occupies in the assembled structure of the torsion box structure (1), and provisionally joining the pre-formed portion of the skin and the spars to each other;
2.b.2) positioning and temporary fixing the lower (or the upper) portions of the ribs to the pre-formed portion of the skin, to the upper (or the lower) portions of the ribs and, as the case might be, to the spars; this step essentially consisting of locating the portions of the ribs in their correct position with the condition that the portions of the ribs connect against the pre-formed portion of the skin, and provisionally fixing to the lower (or the upper) portions of rib to the lower (or the upper) pre-formed portions of the skin and to the upper (or the lower) portions of the ribs and, as the case might be, to the spars;
2.c.1) final join the upper portions of the ribs to the lower portions of the ribs and, as the case might be, to the spars;
2.c.2) final join the portions of the skin (the upper and the lower) to the spars and to the portions of the ribs (the upper and the lower).

4. Method for assembling a structure for an aircraft, according to claim 3, wherein the torsion box structure (1) remains substantially vertical during the assembly in such a way that the front (2) and the rear (2) spars are positioned arranged one on top of the other and the upper (4) and the lower (4') portions of the skin are located in the respective sides.

5. Method for assembling a structure for an aircraft, according to any of previous claims; wherein the means of securing and tightening the skin incorporate a securing device by vacuum, which comprises a set of suction pads distributed on the template element (15).

6. Method for assembling a structure for an aircraft, according to claim 5; wherein the template element (15) essentially consists of curved profiles with the shape corresponding to the theoretical line of the outer surface of the skin.

## Patentansprüche

1. Verfahren zum Zusammensetzen einer Struktur für ein Flugzeug, wobei die Struktur im Wesentlichen besteht aus:
einem Satz von Strukturelementen (2, 3), die zusammen ein Skelett der Struktur bilden; und
eine Haut (4,4'), die so angeordnet ist, dass sie die Struktur um das Skelett herum bedeckt und mit diesem verbunden ist; wobei die Haut im wesentlichen schlaff ist, so dass sie an sich im wesentlichen eine unbestimmte Form hat, bis sie auf und mit dem Skelett verbunden angeordnet ist; die Haut eine Außenoberfläche hat, die Maßtoleranzen erfordert, sobald die Haut auf dem Skelett angeordnet ist; und
das Verfahren die folgenden Schritte umfasst:
a) Vorformen der Haut durch eine Vorrichtung; wobei dieser Schritt im wesentlichen darin besteht, der Haut eine Form zu geben, so dass die Haut während ihrer Handhabung in der Anordnung nicht deformiert oder Veränderungen unterworfen wird;
b) Positionieren und vorübergehendes Fixieren des Skelettes der Struktur in Bezug auf die vorgeformte Haut; wobei dieser Schritt im wesentlichen aus der Bestimmung der relativen Position zwischen den Strukturelementen, die das Skelett bilden, unter der Bedingung, dass das Skelett an der vorgeformten Haut anliegt, sowie dem vorübergehenden Anbringen der vorgeformten Haut an dem Skelett und den Elementen besteht, die das Skelett miteinander bilden; und
c) endgültiges Verbinden des Skeletts mit der Haut;
wobei das Verfahren **dadurch gekennzeichnet ist, dass** die Vorrichtung zum Vorformen der Haut umfasst:
ein Schablonenelement (15) mit Einrichtungen zum Befestigen und Straffen der Haut, so dass, wenn die Haut auf das Schablonenelement (15) gedrückt wird, die Außenoberfläche der Haut ihre genaue theoretische Form annimmt, die die Haut einmal haben sollte, sobald sie auf dem Skelett der Struktur angebracht ist, und diese Form sicher beibehält, indem die Haut mit der richtigen inneren Spannung versehen wird, damit sie sich bei der Durchführung der Vorgänge des Verfahrens nicht verformt, wobei die Einrichtungen zum Sichern und Halten so angeordnet sind, dass sie den Durchtritt von Bohrern und Fiexierungen bei ordnungsgemäßem Ausführen der Vorgänge des Verfahrens gestatten;
eine Einrichtung zum Halten und Positionieren (16, 17, 18, 19) des Schablonenelementes (15), umfassend eine Einrichtung zum Positionieren in der Verschiebung (16, 19) und eine Einrichtung zum Positionieren in dreidimensionaler Drehung (17, 18) mit der Funktion des Positionierens der Haut auf dem Skelett der Struktur.

2. Verfahren zum Zusammensetzen einer Struktur für ein Flugzeug nach Anspruch 1, angewendet auf einen Torsionskastenstrukturtyp (1), der im wesentlichen besteht aus:
einem Skelett, umfassend: eine Vielzahl von Holmen (2), die in Längsrichtung in der Struktur 1 angeordnet sind, und eine Vielzahl von Rippen (3), die in Querrichtung in der Struktur angeordnet sind; und
einer Haut (4, 4'), die so angeordnet wird, dass sie die Struktur um die Holme und die Rippen herum bedeckt und an diesen befestigt wird; wobei die Haut eine aerodynamische Außenfläche hat, die Maßtoleranzen erfordert, sobald die Haut auf dem Skelett zusammengesetzt ist; und
das Verfahren folgende Schritte umfasst:
a) Vorformen der Haut; wobei dieser Schritt im wesentlichen aus der Verformung der Haut besteht, um die genaue theoretische Form zu erreichen, die die Haut einmal auf den Holmen (2) und den Rippen (3) der Torsionskastenstruktur (1) zusammengesetzt haben sollte.
b. 1) Positionieren der Holme (2); wobei dieser Schritt im wesentlichen aus dem Halten der Holme in einer Montagevorrichtung (12) besteht, so dass die genaue relative Position, die zwischen den Holmen in der montierten Struktur der Torsionskastenstruktur (1) besteht, unverändert bleibt;
b. 2) Positionieren und vorübergehendes Fixieren der vorgeformten Haut an den Holmen; wobei dieser Schritt im wesentlichen darin besteht, die vorgeformte Haut auf den Holmen in der richtigen Position anzuordnen, die die Haut in der zusammengesetzten Struktur des Torsionskastens (1) einnimmt, und die vorgeformte Haut und die Holme vorläufig miteinander zu verbinden;
b.3) Positionieren und vorübergehendes Fixieren der Rippen an der vorgeformten Haut und an den Holmen; im wesentlichen bestehend aus dem Anordnen der Rippen in ihrer korrekten Position unter der Bedingung, dass sich die Rippen mit der vorgeformten Haut verbinden und die Rippen vorläufig mit der vorgeformten Haut und den Holmen verbinden;
c.1) schließlich Verbinden der Holme mit den Rippen; und
c.2) schließlich Verbinden der Haut mit den Holmen und den Rippen.

3. Verfahren zum Zusammensetzen einer Struktur für ein Flugzeug nach Anspruch 2, angewendet auf einen Typ einer Torsionskastenstruktur (1), der im wesentlichen besteht aus:
einem Skelett, umfassend: einen vorderen Holm (2) und einen hinteren Holm (2'), die in Längsrichtung in der Struktur angeordnet sind, und mehrere Rippen (3), die in Querrichtung in der Struktur angeordnet sind, wobei jede der Rippen einen oberen Abschnitt der Rippe (3) und einen unteren Abschnitt der Rippe (3') umfasst; und
eine Haut, die einen oberen Abschnitt der Haut (4) und einen unteren Abschnitt der Haut (4') umfasst und dazu eingerichtet ist, die Struktur um die Holme und die Rippen herum zu bedecken und an diesen befestigt zu werden; wobei die Haut eine aerodynamische Außenfläche hat, die Maßtoleranzen erfordert, sobald die Haut auf dem Skelett angebracht ist;
wobei das Verfahren die folgenden Schritte umfasst:
1.a) Vorformen eines der Hautabschnitte, d.h. des oberen (oder des unteren) Hautabschnitts; wobei dieser Schritt im wesentlichen aus der Verformung des Hautabschnitts besteht, um die genaue theoretische Form zu erreichen, die er, einmal auf den Holmen (2) und den Rippen (3) der Torsionskastenstruktur (1) angebracht, haben sollte.
1.b.1) Positionieren der Holme (2); wobei dieser Schritt im wesentlichen aus dem Abstützen der Holme auf einer Montagevorrichtung (12) besteht, so dass die genaue relative Position, die zwischen dem vorderen Holm und dem hinteren Holm der zusammengesetzten Struktur der Torsionskastenstruktur (1) besteht, unverändert bleibt;
1.b.2) Positionieren und vorübergehendes Fixieren des vorgeformten Abschnitts der Haut an den Holmen; wobei dieser Schritt im wesentlichen darin besteht, den vorgeformten Abschnitt der Haut auf den Holmen in der richtigen Position zu positionieren, die der Abschnitt der Haut in der zusammengesetzten Struktur der Torsionskastenstruktur (1) einnimmt, und den vorgeformten Abschnitt der Haut und die Holme miteinander zu verbinden;
1.b.3) Positionieren und zeitweiliges Fixieren der oberen (oder der unteren) Abschnitte der Rippen an dem vorgeformten Abschnitt der Haut und an den Holmen; im wesentlichen bestehend aus dem Anordnen der Abschnitte der Rippen in ihrer korrekten Position unter der Bedingung, dass die Abschnitte der Rippen sich mit dem vorgeformten Abschnitt der Haut verbinden, und vorläufiges Verbinden der oberen (oder der unteren) Abschnitte der Rippen mit dem vorgeformten Abschnitt der Haut und der Holme;
1.c.1) endgültiges Verbinden der Holme mit den oberen (oder unteren) Abschnitten der Rippen;
1.c.2) endgültiges Verbinden des Hautabschnitts mit den Holmen und den oberen (oder unteren) Abschnitten der Rippen;
2.a) Vorformen des anderen Abschnitts der Haut, das heißt des unteren (oder des oberen) Abschnitts der Haut; wobei dieser Schritt im wesentlichen aus der Verformung des Hautabschnitts besteht, um die genaue theoretische Form zu erreichen, die der Hautabschnitt haben sollte, wenn er einmal auf den Holmen (2) und den Rippen (3) der Torsionskastenstruktur (1) zusammengesetzt ist;
2.b.1) Positionieren und vorübergehendes Fixieren des vorgeformten Abschnitts der Haut an den Holmen; wobei dieser Schritt im wesentlichen darin besteht, den vorgeformten Abschnitt der Haut auf den Holmen in der richtigen Position zu positionieren, die der Abschnitt der Haut in der zusammengesetzten Struktur der Torsionskastenstruktur (1) einnimmt, und den vorgeformten Abschnitt der Haut und die Holme vorläufig zu verbinden;
2.b.2) Positionieren und vorrübergehendes Fixieren der unteren (oder der oberen) Abschnitte der Rippen an dem vorgeformten Abschnitt der Haut, an den oberen (oder den unteren) Abschnitten der Rippen und gegebenenfalls an den Holmen; wobei dieser Schritt im wesentlichen darin besteht, die Abschnitte der Rippen in ihrer korrekten Position unter der Bedingung anzuordnen, dass die Abschnitte der Rippen an dem vorgeformten Abschnitt der Haut anliegen, und vorläufiges Fixieren an den unteren (oder den oberen) Abschnitten der Rippe an den unteren (oder oberen) vorgeformten Abschnitten der Haut und an den oberen (oder unteren) Abschnitten der Rippen und gegebenenfalls an den Holmen;
2.c.1) endgültiges Verbinden der oberen Abschnitte der Rippen mit den unteren Abschnitten der Rippen und gegebenenfalls mit den Holmen;
2.c.2) endgültiges Verbinden der Abschnitte der Haut (der oberen und der unteren) mit den Holmen und den Abschnitten der Rippen (den oberen und den unteren).

4. Verfahren zum Zusammensetzen einer Struktur für ein Flugzeug nach Anspruch 3, bei dem die Torsionskastenstruktur (1) während des Zusammensetzens im Wesentlichen vertikal bleibt, so dass der vordere (2) und der hintere (2) Holm übereinander angeordnet positioniert sind und sich der obere (4) und der untere (4') Abschnitt der Haut auf den jeweiligen Seiten befinden.

5. Verfahren zum Zusammensetzen einer Struktur für ein Flugzeug nach einem der vorhergehenden Ansprüche; bei dem die Einrichtung zum Befestigen und Straffen der Haut eine Befestigungsvorrichtung durch Vakuum enthalten, die einen Satz von Saugnäpfen umfasst, die auf dem Schablonenelement (15) verteilt sind.

6. Verfahren zum Zusammensetzen einer Struktur für ein Flugzeug nach Anspruch 5; bei dem das Schablonenelement (15) im wesentlichen aus gekrümmten Profilen besteht, deren Form der theoretischen Linie der Außenfläche der Haut entspricht.

## Revendications

1. Procédé pour assembler une structure pour un aéronef, la structure consiste essentiellement en :
un ensemble d'éléments structurels (2, 3) qui constituent ensemble un squelette de la structure ; et
un revêtement (4, 4') qui est agencé en recouvrant la structure autour du squelette et raccordé à ce dernier ; le revêtement étant sensiblement flasque de sorte qu'il a sensiblement une forme indéterminée en soi jusqu'à ce qu'il soit agencé en étant raccordé sur le squelette ; le revêtement ayant une surface externe qui nécessite des tolérances dimensionnelles sur cette dernière une fois que le revêtement est assemblé sur le squelette ;
le procédé comprenant les étapes suivantes:
a) préformer le revêtement grâce à un dispositif ; cette étape consistant essentiellement à donner une forme au revêtement de sorte que le revêtement ne soit pas déformé ou ne subisse pas de modifications pendant sa manipulation lors de l'assemblage ;
b) positionner et fixer temporairement le squelette de la structure, par rapport au revêtement préformé ; cette étape consistant essentiellement à déterminer la position relative entre les éléments structurels constituant le squelette à la condition que le squelette se raccorde contre le revêtement préformé, ainsi que fixer temporairement le revêtement préformé sur le squelette et les éléments constituant le squelette entre eux ;
c) procéder à l'assemblage final du squelette sur le revêtement ;
le procédé étant **caractérisé en ce que** le dispositif pour préformer le revêtement comprend :
un élément de gabarit (15) ayant des moyens pour fixer et serrer le revêtement de sorte que lorsque le revêtement est forcé sur l'élément de gabarit (15), la surface externe du revêtement acquiert sa forme théorique exacte que le revêtement doit avoir une fois assemblé sur le squelette de la structure et conserve fermement cette forme en fournissant au revêtement la bonne tension interne de sorte qu'il ne se déforme pas lors de la réalisation des opérations du procédé, les moyens de fixation et de support étant agencés de sorte qu'ils permettent le passage des forets et des fixations conjointement avec le bon déroulement des opérations du procédé ;
les moyens de support et de positionnement (16, 17, 18, 19) de l'élément de gabarit (15) comprenant des moyens pour le positionnement en translation (16, 19) et des moyens pour le positionnement en rotation tridimensionnelle (17, 18), avec la fonction de positionner le revêtement sur le squelette de la structure.

2. Procédé pour assembler une structure pour un aéronef selon la revendication 1, appliqué sur un type de structure de boîte de torsion (1) qui se compose essentiellement de :
un squelette comprenant : une pluralité de longerons (2) agencés longitudinalement dans la structure (1) et une pluralité de nervures (3) agencées transversalement dans la structure ; et
un revêtement (4, 4') agencé en recouvrant la structure autour des longerons et des nervures et fixé à ces derniers ; le revêtement ayant une surface externe aérodynamique qui nécessite des tolérances dimensionnelles sur cette dernière une fois que le revêtement est assemblé sur le squelette ;
le procédé comprenant les étapes suivantes consistant à :
a) préformer le revêtement ; cette étape consistant essentiellement à déformer le revêtement afin d'atteindre la forme théorique exacte que le revêtement doit avoir une fois assemblé sur les longerons (2) et les nervures (3) de la structure de boîte de torsion (1) ;
b.1) positionner les longerons (2) ; cette étape consistant essentiellement à supporter les longerons dans un bâti de montage (12), de sorte que la position relative exacte existant entre les longerons dans la structure assemblée de la structure de boîte de torsion (1) reste fixe ;
b.2) positionner et fixer temporairement le revêtement préformé sur les longerons ; cette étape consistant essentiellement à positionner le revêtement préformé sur les longerons dans la bonne position que le revêtement occupe dans la structure assemblée de la boîte de torsion (1) et assembler provisoirement le revêtement préformé et les longerons entre eux ;
b.3) positionner et fixer temporairement les nervures sur le revêtement préformé et sur les longerons ; consistant essentiellement à positionner les nervures dans leur position correcte à la condition que les nervures se raccordent contre le revêtement préformé et assembler les nervures au revêtement préformé et aux longerons ;
c.1) procéder à l'assemblage final avec les nervures ;
c.2) procéder à l'assemblage final avec les longerons et les nervures.

3. Procédé pour assembler une structure pour un aéronef selon la revendication 2, appliqué sur un type de structure de boîte de torsion (1) qui consiste essentiellement en :
un squelette comprenant : un longeron avant (2) et un longeron arrière (2') agencés longitudinalement dans la structure, et une pluralité de nervures (3) agencées transversalement dans la structure, chacune des nervures comprenant une partie supérieure de la nervure (3) et une partie inférieure de la nervure (3') ; et
un revêtement comprenant une partie supérieure du revêtement (4) et une partie inférieure du revêtement (4') agencé en recouvrant la structure autour des longerons et des nervures et fixé à ces dernières ; le revêtement ayant une surface externe aérodynamique qui nécessite des tolérances dimensionnelles sur cette dernière une fois que le revêtement est assemblé sur le squelette ;
le procédé comprenant les étapes suivantes :
1.a) préformer l'une des parties du revêtement qui est la partie supérieure (ou la partie inférieure) du revêtement ; cette étape consistant essentiellement à déformer la partie du revêtement afin d'obtenir la forme théorique exacte qu'il doit avoir une fois assemblé aux longerons (2) et aux nervures (3) de la structure de boîte de torsion (1) ;
1.b.1) positionner les longerons (2) ; cette étape consistant essentiellement à supporter les longerons sur un gabarit d'assemblage (12), de sorte que la position relative exacte existant entre le longeron avant et le longeron arrière de la structure assemblée de la structure de boîte de torsion (1) reste fixe ;
1.b.2) positionner et fixer temporairement la partie préformée du revêtement sur les longerons ; cette étape consistant essentiellement à positionner la partie préformée du revêtement sur les longerons dans la bonne position que la partie du revêtement occupe dans la structure assemblée de la structure de boîte de torsion (1), et assembler provisoirement la partie préformée du revêtement et les longerons entre eux ;
1.b.3) positionner et fixer temporairement les parties supérieures (ou les parties inférieures) des nervures sur la partie préformée du revêtement et sur les longerons ; consistant essentiellement à positionner les parties des nervures dans leur position correcte à la condition que les parties des nervures se raccordent contre la partie préformée du revêtement, et assembler provisoirement les parties supérieures (ou les parties inférieures) des nervures sur la partie préformée du revêtement et des longerons ;
1.c.1) procéder à l'assemblage final des longerons aux parties supérieures (ou aux parties inférieures) des nervures ;
1.c.2) procéder à l'assemblage final du revêtement sur les longerons et les parties supérieures (ou les parties inférieures) des nervures ;
2.a) préformer l'autre partie du revêtement qui est la partie inférieure (ou la partie supérieure) du revêtement ; cette étape consistant essentiellement à déformer la partie du revêtement afin d'obtenir la forme théorique exacte que la partie du revêtement doit avoir une fois assemblée sur les longerons (2) et les nervures (3) de la structure de boîte de torsion (1) ;
2.b.1) positionner et fixer temporairement la partie préformée du revêtement sur les longerons ; cette étape consistant essentiellement à positionner la partie préformée du revêtement sur les longerons dans la bonne position que la partie du revêtement occupe dans la structure assemblée de la structure de boîte de torsion (1), et assembler provisoirement la partie préformée du revêtement et les longerons entre eux ;
2.b.2) positionner et fixer temporairement les parties inférieures (ou les parties supérieures) des nervures sur la partie préformée du revêtement, sur les parties supérieures (ou les parties inférieures) des nervures et selon le cas, sur les longerons ; cette étape consistant essentiellement à positionner les parties des nervures dans leur position correcte à la condition que les parties des nervures se raccordent contre la partie préformée du revêtement, et fixer provisoirement les parties inférieures (ou aux parties supérieures) aux parties préformées inférieures (ou supérieures) du revêtement et aux parties supérieures (ou inférieures) des nervures et selon le cas, aux longerons ;
2.c.1) procéder à l'assemblage final des parties supérieures des nervures aux parties inférieures des nervures et selon le cas, aux longerons ;
2.c.2) procéder à l'assemblage final des parties du revêtement (les parties supérieures et inférieures) aux longerons et aux parties des nervures (supérieures et inférieures).

4. Procédé pour assembler une structure pour un aéronef, selon la revendication 3, dans lequel la structure de boîte de torsion (1) reste sensiblement verticale pendant l'assemblage de sorte que les longerons avant (2) et arrière (2) sont positionnés l'un sur le dessus de l'autre et les parties supérieure (4) et inférieure (4') du revêtement sont positionnées dans les côtés respectifs.

5. Procédé pour assembler une structure pour un aéronef, selon l'une quelconque des revendications précédentes, dans lequel les moyens pour fixer et serrer le revêtement comprennent un dispositif de fixation par vide, qui comprend un ensemble de ventouses réparties sur l'élément de gabarit (15).

6. Procédé pour assembler une structure pour un aéronef, selon la revendication 5, dans lequel l'élément de gabarit (15) se compose essentiellement de profils incurvés avec la forme qui correspond à la ligne théorique de la surface externe du revêtement.
